(19) **Europäisches Patentamt**

**European Patent Office**

**Office européen des brevets**

(11) **EP 0 658 451 B1**

(12) **EUROPÄISCHE PATENTSCHRIFT**

(45) Veröffentlichungstag und Bekanntmachung des Hinweises auf die Patenterteilung:
**09.07.1997 Patentblatt 1997/28**

(51) Int. Cl.[6]: **B60C 11/00**

(21) Anmeldenummer: **94890183.0**

(22) Anmeldetag: **27.10.1994**

(54) **Reifen**

Tyre

Bandage pneumatique

(84) Benannte Vertragsstaaten:
**AT DE FR GB IT**

(30) Priorität: **16.12.1993 AT 2552/93**

(43) Veröffentlichungstag der Anmeldung:
**21.06.1995 Patentblatt 1995/25**

(73) Patentinhaber: **Semperit Reifen Aktiengesellschaft**
**A-2514 Traiskirchen (AT)**

(72) Erfinder:
• **Liederer, Werner, Dr.**
**A-2514 Traiskirchen (AT)**

• **Jaeger, Gert, Ing.**
**A-2500 Baden (AT)**

(74) Vertreter: **Vinazzer, Edith, Dipl.-Ing. et al**
**Schönburgstrasse 11/7**
**1040 Wien (AT)**

(56) Entgegenhaltungen:
**EP-A- 0 118 059          EP-A- 0 542 493**
**US-A- 4 327 792**

• **PATENT ABSTRACTS OF JAPAN vol. 13, no. 458 (M-880) (3806) 17. Oktober 1989 & JP-A-01 178 005 (BRIDGESTONE CORP.) 14. Juli 1989**

## Beschreibung

Die vorliegende Erfindung betrifft ein Verfahren zur Minimierung von tieffrequenten Geräuschanteilen im Laufstreifen von Reifen, wobei der Laufstreifen mindestens zwei in Umfangsrichtung umlaufende Laufstreifenbereiche aufweist, die bezüglich ihrer Pitchanzahl und ihrer Pitchfolge übereinstimmen.

Es sind bereits verschiedene Verfahren vorgeschlagen und auch realisiert worden, mit deren Hilfe das von Fahrzeugluftreifen während des Abrollens durch die Profilcharakteristik mit Quernuten, Umfangsnuten, Blöcken etc. entstehende Rollgeräusch angenehmer gestaltet wird. So ist es insbesondere in den letzten Jahren allgemein üblich geworden, die Methode der Pitchlängenvariation anzuwenden, bei der den über den Umfang aufeinanderfolgenden gleichartigen Profilelementen unterschiedliche Umfangslängen, auch Pitchlängen genannt, zugeordnet werden. Beispielsweise ist es üblich, Profilelemente mit Pitches in 2 bis 5 unterschiedlichen Pitchlängen zu wählen, deren Längenverhältnisse zueinander und deren absolute Längen unter Bedachtnahme auf die sonstigen Profileigenschaften entsprechend gewählt werden und deren günstigste Aufeinanderfolge (Pitchfolge) über dem Reifenumfang rechnerisch ermittelt wird. Zu diesem Thema existiert auch eine größere Anzahl von Patentliteratur und es wird in diesem Zusammenhang beispielsweise auf die US-A-4327792 und die US-A-4598748 verwiesen. Diese Dokumente offenbaren übrigens Reifen mit Laufstreifenprofilen, wo mindestens zwei in Umfangsrichtung umlaufende Laufstreifenbereiche vorgesehen sind, die bezüglich Pitchanzahl und Pitchfolge übereinstimmen. Bei den bekannten Methoden bzw. Verfahren geht es grundsätzlich um eine Modulation des Abrollgeräusches, die insbesondere bewirkt, daß im Bereich der Pitchharmonischen, deren Frequenz von der jeweiligen Gesamtpitchanzahl und der Raddrehzahl abhängt, eine Verbreiterung der auftretenden Frequenzen auf ein Frequenzband und gleichzeitig eine Absenkung der Amplituden erfolgt.

Auch die JP-A-1 178 005 befaßt sich mit der Aufspreizung bzw. Verteilung der durch das Abrollen von Reifen am Untergrund entstehenden hörbaren Frequenzen. Dazu wird vorgeschlagen, bei einem Laufstreifenprofil, das zwei in Umfangsrichtung umlaufende Profilbereiche bzw. Profilrippen besitzt, diese in Umfangsrichtung um eine Phasendifferenz zu versetzen. Jede dieser Profilrippen setzt sich dabei aus einer Vielzahl unterschiedlicher Typen von Pitchgruppen zusammen, die wiederum jeweils aus einer Anzahl von Pitches, die in unterschiedlichen Umfangslängen verliegen, bestehen.

Bei vielen Laufstreifenprofilen sind jedoch störende, tieffrequente Geräuschanteile feststellbar, deren Frequenzen sich proportional zur Raddrehzahl (Fahrzeuggeschwindigkeit) ändern. In einem Ordnungsspektrum sind diese Geräuschanteile als ausgeprägte Peaks bemerkbar. Bei Fahrzeuggeschwindigkeiten bis ca. 90 km/h äußern sich diese Frequenzen in einem unangenehmen Brummen oder Dröhnen. Sie lassen sich durch die bekannten Methoden nicht minimieren bzw. eliminieren. Ob bei einem bestimmten Laufstreifenprofil bzw. durch ein bestimmtes Laufstreifenband derartige tieffrequente Geräuschanteile, im Bereich bis etwa zur 20. Ordnung, auftreten läßt sich meßtechnisch oder rechnerisch feststellen.

Die vorliegende Erfindung hat sich nun die Aufgabe gestellt, ein Verfahren zur Minimierung bzw. Eliminierung dieser tieffrequenten Geräuschanteile zu erzielen, vorzuschlagen.

Gelöst wird die gestellte Aufgabe erfindungsgemäß dadurch, daß die beiden Laufstreifenbereiche gegeneinander um einen der sich aus der Formel

$$(2n + 1) \times 180°/i \text{ ggf. } \pm \text{ bis zu } 360°/2P,$$

errechenbaren Gradwert über den Reifenumfang verdreht bzw. verschoben werden, wobei i die Nummer der Ordnung ist, deren Amplitude verringert werden soll, $i \leq 20$, $n \leq i - 1$, n eine natürliche Zahl unter Einschluß der Null, P die Gesamtanzahl der Pitches in den betrachteten Laufstreifenbereichen ist.

Nach der vorliegenden Erfindung ist es erstmalig möglich, gezielt störende tieffrequente Geräuschanteile durch einfaches Verdrehen bzw. Verschieben der solche Geräuschanteile erzeugenden Laufstreifenbereiche zu eliminieren bzw. zumindest zu minimieren. Geringfügige Abweichungen von den gemäß der angegebenen Formel ermittelten Verdrehungswerten in der Größenordnung von bis zu $\pm$ 360°/2P haben kaum einen Einfluß auf die Minimierung der Amplitude der betreffenden Ordnung. Solche geringfügigen Abweichungen können sich jedoch auf die Amplituden von hohen Ordnungen im Ordnungsspektrum, die im Bereich der Pitchharmonischen auftreten, positiv auswirken.

Die Nummer der Ordnung, deren Amplitude minimiert werden soll, läßt sich auf einfache Weise meßtechnisch oder rechnerisch ermitteln.

Nach einer bevorzugten Ausführungsform der Erfindung ist $i \leq 10$. Für Ordnungszahlen im Bereich bis 10 hat sich herausgestellt, daß das erfindungsgemäße Verschieben von Laufstreifenbereichen auch subjektiv die beste Wirkung zeigt.

In diesem Zusammenhang ist es auch günstig, wenn die in Pitchanzahl und Pitchfolge übereinstimmenden Laufstreifenbereiche eine Gesamtpitchanzahl von 40 bis 80, insbesondere von 50 bis 70, aufweisen. Dabei beträgt die Anzahl der unterschiedlichen Pitches in diesen Laufstreifenbereichen mindestens 2, insbesondere zwischen 2 und 5.

Die vorliegende Erfindung betrifft ferner auch einen Reifen, dessen Laufstreifen nach dem erfindungsgemäßen Verfahren gestaltet ist.

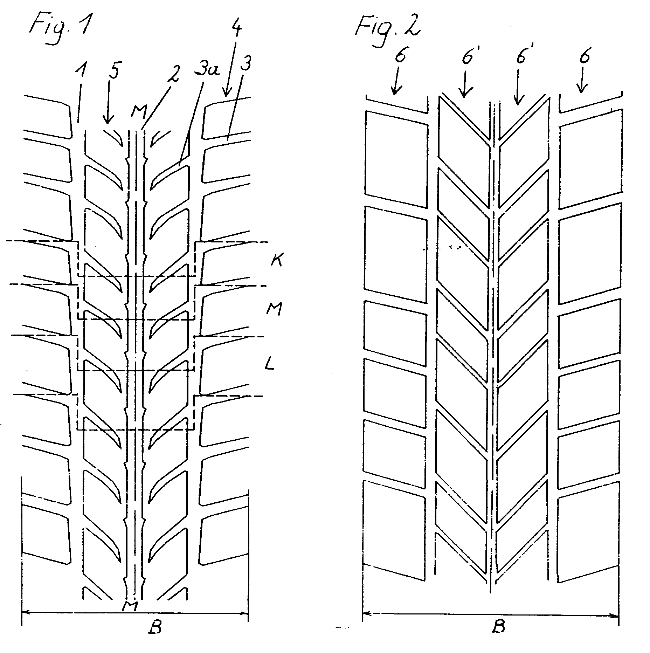

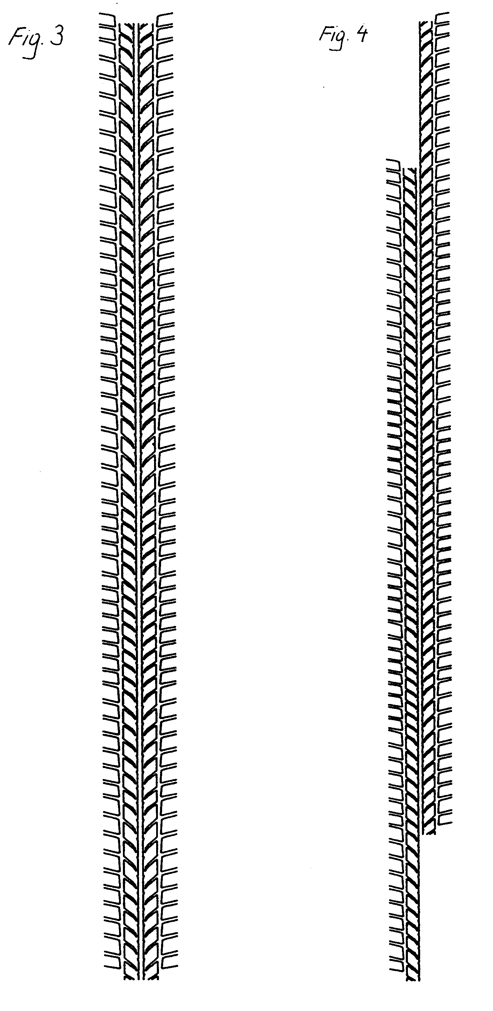

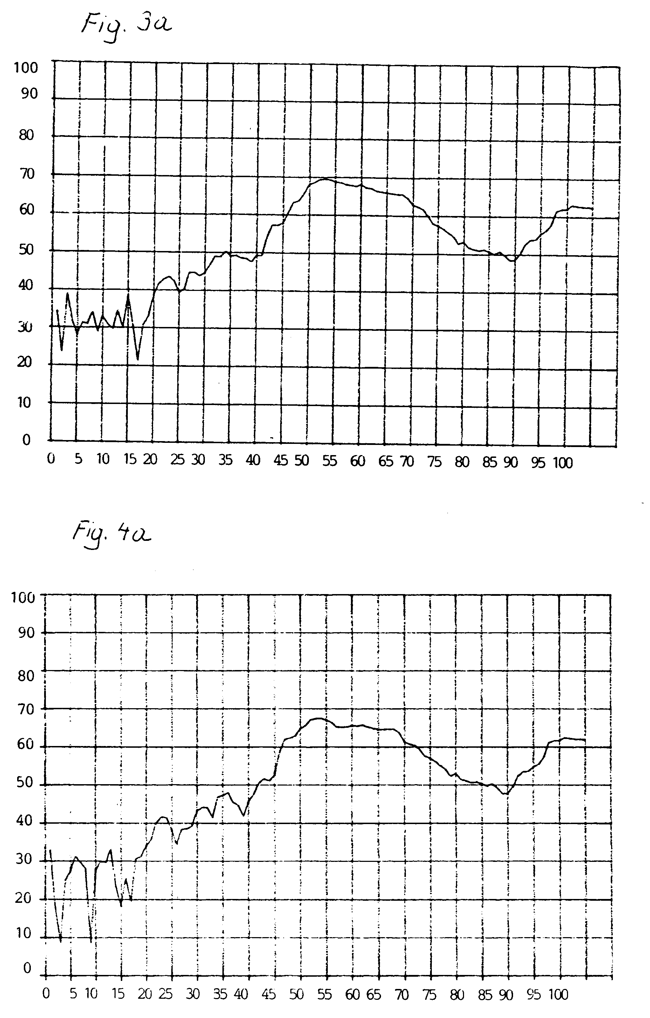

Weitere Merkmale, Vorteile und Einzelheiten der Erfindung werden nun anhand der Zeichnung, die einige Ausführungsbeispiele darstellt, näher beschrieben. Dabei zeigt Fig. 1 eine Draufsicht auf eine Teilabwicklung eines schematisch dargestellten Laufstreifenprofiles für einen PKW-Reifen, Fig. 2 ein weiteres Ausführungsbeispiel in zu Fig. 1 analoger Darstellung, Fig. 3 schematisch die Gesamtabwicklung des Laufstreifens gemäß Fig. 1, Fig. 4 das Laufstreifenprofil nach Fig. 3 mit nach der vorliegenden Erfindung gegeneinander verschobenen Laufstreifenhälften und die Fig. 3a und 4a rechnerisch ermittelte Ordnungsspektren zu den Laufstreifen gemäß Fig. 3 und Fig. 4.

Fig. 1 zeigt ein sogenanntes gepfeiltes und somit laufrichtungsgebundenes Laufstreifenprofil für einen PKW-Reifen, welches symmetrisch zur Umfangsmittellinie M-M gestaltet ist. Derartige Laufstreifenprofile werden insbesondere bei PKWReifen eingesetzt. Das schematisch dargestellte Laufstreifenprofil wird über seine Breite B, die der größten Breite in der Bodenaufstandsfläche (Reifen auf seiner Normfelge unter Maximallast und Inndendruck gemäß E.T.R.T.O.) entspricht, betrachtet und weist eine entlang der Umfangslinie M-M verlaufende Umfangsnut 2 und zwei weitere im wesentlichen gerade verlaufende Umfangsnuten 1 in den beiden Laufstreifenhälften auf. Eine weitere Gliederung des Laufstreifens erfolgt durch eine Vielzahl von in Umfangsrichtung voneinander beabstandeten Quernuten 3, derart, daß zu den Laufstreifenrandbereichen zu je eine Schulterblockreihe 4 gebildet wird. Die Quernuten 3 setzen sich laufstreifeninnenseitig als Sacknuten 3a fort, so daß zwischen der mittleren Umfangsnut 2 und den beiden Umfangsnuten 1 je ein Laufstreifenband 5 mit zusammenhängenden Bereichen gebildet wird. Die Anordnung der Quernuten 3 über die Laufstreifenbreite B erfolgt derart, daß jede Quernut 3 in der einen Laufstreifenhälfte zusammen mit ihrer spiegelbildlich angeordneten Quernut 3 in der anderen Laufflächenhälfte im wesentlichen eine V-Form ergibt. Wie an sich bekannt erfolgt ferner die Anordnung der einzelnen Profilelemente, Blöcke bzw. "Quasiblöcke" in beiden Laufstreifenhälften über den Reifenumfang nach einer sogenannten Pitchfolge. Demnach setzt sich das Laufstreifenprofil aus einer Vielzahl von in Umfangsrichtung aneinander gereihten, gleichartigen Dessinzyklen, die im allgemeinen Pitches genannt werden, zusammen. Ein Pitch umfaßt jeweils eine Quernut mit einem unmittelbar benachbarten Profilelement, beispielsweise einem Block. Als Gesamtzahl der über den Reifenumfang vorgesehenen Pitches wird üblicherweise eine Zahl zwischen 40 und 80 gewählt. Dabei werden Pitches mit unterschiedlichen Umfangslängen verwendet, deren günstigste Anordnung bzw. Abfolge (Pitchfolge) über den Reifenumfang mittels eines Rechenprogrammes ermittelt wird. Die Pitchfolge des in Fig. 1 dargestellten Laufstreifenprofiles setzt sich aus Pitches mit drei unterschiedlichen Pitchlängen L (längstes Pitch), M (mittleres Pitch) und K (kürzestes Pitch) zusammen. In Fig. 1 sind einige der Pitches mit ihren zugehörigen Pitchgrenzen eingezeichnet. Die Pitchfolge an sich ist dabei nicht Gegenstand der vorliegenden Erfindung.

Da das in Fig. 1 dargestellte Laufstreifenprofil bezüglich der Umfangsmittellinie M-M symmetrisch gestaltet ist sind auch die Pitchfolgen in der linken und in der rechten Laufstreifenhälfte gleich. Fig. 3 zeigt schematisch die Gesamtabwicklung des Laufstreifens nach Fig. 1 in die Ebene, die Gesamtpitchanzahl beträgt 60 Pitches. Durch die symmetrische Ausgestaltung und Anordnung der linken und der rechten Laufstreifenhälfte ergibt sich, daß jeweils die in der linken und der rechten Laufstreifenhälfte angeordneten Quernuten beim Abrollen des Reifens gleichzeitig in den Latsch einlaufen und auch auslaufen.

Für einen Reifen der Dimension 195/65 R 15 mit einer Gesamtpitchanzahl von 60 und einer optimierten Pitchfolge wurde mit dem in Fig. 3 dargestellten Laufstreifenprofil rechnerisch ein Ordnungsspektrum erstellt. Fig. 3a zeigt dieses Spektrum, wobei auf der Abszisse die Ordnungszahlen und auf der Ordinate die logarithmierten relativen Amplitudenwerte aufgetragen sind. Erwartungsgemäß ergeben sich Maxima im Bereich der Pitchharmonischen (50. bis 60. Ordnung). Auffallend sind jedoch die aufgetreten Maxima im Bereich der tiefen Ordnungen (bis etwa zur 15. Ordnung) und dort insbesondere das Maximum der 3. Ordnung. Bei einem Reifen mit diesem Laufstreifenprofil werden sich daher tieffrequente Geräuschanteile, störend bemerkbar machen, und zwar insbesondere als unangenehmes Dröhnen bzw. Brummen.

Gemäß der vorliegenden Erfindung wurde nun festgestellt, daß sich die Amplitude der störenden 3. Ordnung im gegenständlichen Laufstreifenprofil nach Fig. 3 durch ein gezieltes Verdrehen bzw. Verschieben der beiden Laufstreifenhälften gegeneinander reduzieren läßt.

Davon ausgehend, daß der Laufstreifen einen Kreis umschreibt hat sich herausgestellt, daß sich bei einer gegenseitigen Verdrehung der beiden Laufstreifenhälften um wahlweise 60°, 180° oder 300° die Amplitude der 3. Ordnung minimieren läßt. Fig. 4 zeigt die gegenseitige Verschiebung der beiden Laufstreifenhälften, wobei eine Verdrehung um 60° gewählt wurde. Das zugehörige rechnerisch ermittelte Pegelspektrum ist in Fig. 4a dargestellt. Deutlich zu sehen ist, daß im Bereich der 3. Ordnung nun ein Minimum vorliegt, wobei gleichzeitig die Maxima weiterer tiefen Ordnungen nicht mehr so ausgeprägt sind und ferner sich auch die Amplituden im Bereich der Pitchharmonischen verringert haben. Der letztgenannte positive Effekt hängt in diesem Fall mit der Profilmustercharakteristik zusammen und resultiert demnach mittelbar aus der Maßnahme, die beiden Laufstreifenhälften gegeneinander um 60° zu verdrehen.

Generell lassen sich nach der vorliegenden Erfindung bei Laufstreifenprofilen, die in Pitchanzahl und Pitchfolge übereinstimmende Umfangsbereiche, beispielsweise Laufstreifenhälften oder Laufstreifenbänder, aufweisen, in diesen Umfangsbereichen festgestellte, störende tieffrequente Geräuschanteile durch gezieltes Verdrehen dieser Umfangsbereiche gegeneinander eliminieren bzw. zumindest minimieren, wobei

Verdrehung [°] = (2n + 1) x 180/i

mit i: Nummer der Ordnung, deren Amplitude minimiert wird, i = 1 bis 20 n≤i-1, und n: natürliche Zahl unter Einschluß der Null

Diese einfache Methode läßt sich erfolgreich für tiefe Ordnungen, etwa bis i=20, insbesondere bis i≤10, anwenden, da die zugehörigen Frequenzen in einem Bereich liegen, wo die Wellenlängen relativ groß sind im Verhältnis zur Latschbreite B.

Ergibt beispielsweise das Ordnungsspektrum eines Laufstreifens mit gleichen Laufstreifenhälften, daß die Amplitude der 5. Ordnung ein Maximum aufweist, so kann diese Amplitude dadurch minimiert werden, daß die beiden Laufstreifenhälften um wahlweise 36°, 108°, 180°, 252° und 324° gegeneinander verdreht werden. Generell ist feststellbar, daß bei einer 0-Grad-Verschiebung (Ausgangslage) Amplituden von tiefen Ordnungen in etwa ihren maximalen Pegelwert haben. Über den Reifenumfang betrachtet gibt es demnach fünf Positionen, wo die Amplitude der 5. Ordnung minimal wird. Daraus ergibt sich, was auch in Übereinstimmung mit obiger Formel ist, daß bei einer Verdrehung um 180° alle Amplituden von ungeraden Ordnungen ein Minimum haben und somit diese Verdrehung im allgemeinen sehr günstig sein wird.

Es hat sich ferner herausgestellt, daß geringfügige Abweichungen von den gemäß obiger Formel ermittelten Verdrehungswerten kaum einen Einfluß auf die Minimierung der Amplitude der betreffenden niedrigen Ordnung zeigen. Solche geringfügigen Abweichungen können sich jedoch auf hohe Ordnungen, die im Bereich der Pitchharmonischen auftreten, positiv auswirken, da sich herausgestellt hat, daß die niedrigen Ordnungen auf große Verdrehungen reagieren, die Ordnungen im Bereich der Pitchharmonischen jedoch sehr stark auf kleine Verdrehungen. Der für diese Feinverdrehung ermittelte Bereich beträgt ± 360°/2P, wobei P die Gesamtanzahl der Pitches über den Reifenumfang ist. Dabei gehört es zum Stand der Technik Feinverdrehungen um die 0°-Lage (Ausgangslage) von Laufstreifenbereichen in dieser Größenordnung vorzunehmen.

Das erfindungsgemäße Verfahren ist auch auf Laufstreifenprofile anwendbar, die Pitches aufweisen, die nicht über die gesamte Laufstreifenbreite B verlaufen. Ein Beispiel eines solchen Profiles ist in Fig. 2 dargestellt. Gezeigt ist die Ausgangslage vor erfindungsgemäßer Verschiebung von Laufstreifenbereichen. Das Profil setzt sich aus vier Blockreihen 6, 6' zusammen, wobei in den beiden Schulterblockreihen 6 und den beiden Mittelblockreihen 6' Pitchfolge und Gesamtpitchanzahl jeweils übereinstimmen. Die Pitchfolge der Schulterblockreihen weicht jedoch von den Pitchfolgen der Mittelblockreihe ab. Ebenso sind in diesen Blockreihen die Gesamtpitchanzahlen verschieden. Die Lage der Blockreihen 6 bzw. 6' zueinander kann nun erfindungsgemäß optimiert werden, indem rechnerisch oder meßtechnisch festgestellt wird, ob ein bzw. welcher tieffrequenter Geräuschanteil beim Abrollen eines Reifens mit diesem Laufstreifen entsteht, und ob die Schulterblockreihen und/oder die Mittelblockreihen für Maxima im Bereich tiefer Ordnungszahlen verantwortlich sind. Die Ausgangslage für die gemäß obiger Formel ermittelten Verschiebungswerte der jeweiligen Blockreihen ist eine Lage, bei der keine gegenseitige Verschiebung bzw. Verdrehung vorliegt.

Die vorliegende Erfindung kann demnach auch bei Laufstreifenprofilen angewandt werden, wo nur durch zwei Laufstreifenbänder oder zwei Blockreihen, welche die gleiche Pitchfolge und die gleiche Pitchanzahl aufweisen, störende tieffrequente Geräuschanteile im Abrollgeräusch entstehen.

**Patentansprüche**

1. Verfahren zur Minimierung von tieffrequenten Geräuschanteilen im Laufstreifen von Reifen, wobei der Laufstreifen mindestens zwei in Umfangsrichtung umlaufende Laufstreifenbereiche aufweist, die bezüglich ihrer Pitchanzahl und ihrer Pitchfolge übereinstimmen, dadurch gekennzeichnet, daß die beiden Laufstreifenbereiche gegeneinander um einen der aus der Formel

   (2n + 1) x 180°/i, ggf. ± bis zu 360°/2P

   errechenbaren Gradwert über den Reifenumfang gegeneinander verdreht bzw. verschoben werden, wobei i die Nummer der Ordnung, deren Amplitude verringert werden soll, i ≤ 20, n ≤ i - 1, n eine natürliche Zahl unter Einschluß der Null und P die Gesamtanzahl der Pitches in den betrachteten Laufstreifenbereichen ist.

2. Verfahren nach Anspruch 1, dadurch gekennzeichnet, daß die Nummer der Ordnung, deren Amplitude minimiert werden soll, meßtechnisch oder rechnerisch ermittelt wird.

3. Verfahren nach Anspruch 1 oder 2, dadurch gekennzeichnet, daß i ≤ 10 ist.

4. Verfahren nach einem der Ansprüche 1 bis 3, dadurch gekennzeichnet, daß die beiden Laufstreifenbereiche eine Gesamtpitchanzahl von 40 bis 80, insbesondere von 50 bis 70, aufweisen.

5. Verfahren nach einem der Ansprüche 1 bis 4, dadurch gekennzeichnet, daß die Anzahl unterschiedlicher Pitches in diesen beiden Laufstreifenbereichen mindestens 2, insbesondere zwischen 3 und 5, beträgt.

6. Reifen, dessen Laufstreifen nach dem Verfahren gemäß einem oder mehrerer der Ansprüche 1 bis 5 gestaltet ist.

## Claims

1. Method of minimising low-frequency noise levels in the tread strip of tyres, the tread strip having at least two tread strip regions, which extend in the circumferential direction and are identical in respect of their pitch number and their pitch sequence, characterised in that the two tread strip regions are rotated relative to each other through a degree value, which can be calculated from the formula

$$(2n + 1) \times 180/i, \text{ possibly } \pm \text{ up to } 360°/2P,$$

over the tyre circumference, or respectively displaced relative to each other, in which formula i is the number of the order, the amplitude of which is to be reduced, i is $\leq 20$, n is $\leq i - 1$, n is a natural number including zero, and P is the total number of pitches in the tread strip regions under consideration.

2. Method according to claim 1, characterised in that the number of the order, the amplitude of which is to be 6minimised, is determined by measurement techniques or computer.

3. Method according to claim 1 or 2, characterised in that i is $\leq 10$.

4. Method according to one of claims 1 to 3, characterised in that the two tread strip regions have a total pitch number of between 40 and 80, more especially between 50 and 70.

5. Method according to one of claims 1 to 4, characterised in that the number of variable pitches in these two tread strip regions is at least 2, more especially between 3 and 5.

6. Tyre, the tread strip of which is configured in accordance with the method according to one or more of claims 1 to 5.

## Revendications

1. Procédé pour réduire des composantes de bruit à basses fréquences dans la bande de roulement de pneumatiques, la bande de roulement comportant deux parties s'étendant dans la direction circonférentielle et qui coïncident en ce qui concerne leur nombre de pas et leur séquence de pas, caractérisé en ce que les deux parties de la bande de roulement sont pivotées ou décalées l'une par rapport à l'autre, sur la circonférence du pneumatique, d'une valeur en degrés pouvant être calculée selon la formule

$$(2n + 1) \times 180/i, \text{ éventuellement } \pm \text{ jusqu'à } 360°/2P$$

i étant le numéro d'ordre dont l'amplitude doit être réduite, $i \leq 20$, $n \leq i - 1$, n un nombre naturel incluant le zéro et P le nombre total des pas dans les parties considérées de la bande de roulement.

2. Procédé selon la revendication 1, caractérisé en ce que le numéro d'ordre dont l'amplitude doit être réduite est déterminé au moyen d'une technique de mesure ou par calcul.

3. Procédé selon la revendication 1 ou 2, caractérisé en ce que l'on a $i \leq 10$.

4. Procédé selon l'une des revendications 1 à 3, caractérisé en ce que les deux parties de la bande de roulement possèdent un nombre total de pas de 40 à 80, notamment de 50 à 70.

5. Procédé selon l'une des revendications 1 à 4, caractérisé en ce que le nombre de pas différents dans ces deux parties de la bande de roulement est égal à au moins 2 et est compris notamment entre 3 et 5.

6. Pneumatique, dont la bande de roulement est agencée conformément au procédé selon une ou plusieurs des revendications 1 à 5.

Fig. 1

Fig. 2

Fig. 3

Fig. 4

Fig. 3a

Fig. 4a

8